# EUROPEAN PATENT APPLICATION

(11) **EP 4 741 286 A1**
(43) Date of publication of application: **13.05.2026**
(21) Application number: 24211347.0
(22) Date of filing: 07.11.2024
(51) Int. Cl.: B64C 29/00, B64C 27/06, B64C 25/52, B64U 60/50, B64U 10/20, B64U 30/12, B64U 30/21, B64U 50/12, B64U 50/13, B64U 50/19, B64U 50/31, B64C 27/82

(54) **ROTOR AIRCRAFT WITH DUAL FLIGHT MODE**

(71) Applicant: UAB PB Group, 78137 Siauliai (LT)
(72) Inventor: Skulskis, Donatas, Siauliai (LT)
(74) Representative: Metida

(57) **Abstract**

A vertical take-off and landing (VTOL) aircraft designed for both vertical and horizontal flight features a fuselage that houses essential stability and propulsion components. The aircraft includes a main rotor (2) and wide-chord blades (1) with a fully proportional cross-section, enabling high lift in both VTOL and fixed-wing modes. The flight control system facilitates smooth transitions between flight modes by adjusting the orientation of the blades (1), switching between the main rotor (2) and a rear pusher propeller (5) driven by a gas engine (16). Stability in VTOL mode is maintained by front and rear duct fans (6, 6') and ailerons (4, 4'), while in horizontal mode, stability is provided by front and rear skids (3, 3'). The aircraft is further enhanced by solar panels (14) on the fuselage, allowing for battery recharging during horizontal flight, extending operational endurance. A payload compartment (10) maintains the aircraft's center of gravity across flight modes.

## Description

### FIELD OF THE INVENTION

The present invention falls within the field of aerospace engineering, manned aircraft and unmanned aerial vehicles (UAV), specifically focusing on rotor aircraft capable of vertical takeoff and landing VTOL (Vertical Takeoff and Landing). This invention further pertains to aircraft with hybrid propulsion systems that utilize dual propulsion types for seamless transitions between vertical and horizontal flight modes. Additionally, the invention includes control systems for hybrid propulsion to manage torque, enhance stability, and optimize energy efficiency.

### BACKGROUND OF THE INVENTION AND ANALYSIS OF PRIOR ART

VTOL (Vertical Takeoff and Landing) and aircraft technology have advanced significantly in recent years, driven by increasing demand for autonomous air mobility, military applications, cargo delivery, and aerial surveillance. Aircraft generally fall into two main categories: multi-rotor aircraft and fixed-wing aircraft, each offering unique strengths and limitations.

Many traditional multi-rotor UAV are constrained by their reliance on electric batteries, which provide limited flight time and range. These UAV are typically suited for short missions, as their battery capacity cannot support long-duration or long-distance operations. High energy consumption limits multi-rotor constructions to 20-30 minutes of flight, restricting long-range missions. And these UAV generally were slow, operating below 50 km/h, making them unsuitable for applications needing faster travel.

Current multi-rotor UAV constructions struggle with limited payload capacity due to their relatively small size and energy limitations. Increasing the payload often comes at the cost of reduced flight time, further complicated mission planning and use in industrial or delivery settings.

Energy consumption is often inefficient in multi-rotor systems, such as maintaining hover or performing vertical takeoff and landing operations requires continuous use of power.

Fixed-wing aircraft, on the other hand, are more energy-efficient in horizontal flight but lack the ability to take off or land vertically. Fixed-wing aircraft cannot hover or perform stationary flights, making them unsuitable for close-up inspections or deliveries in tight spaces.

Many UAV designs are optimized for either vertical flight (hovering and takeoff) or long-range horizontal flight. However, a few UAVs effectively combine both functionalities in a single system, leading to compromises in versatility and operational capabilities. Traditional UAV designs that require advanced rotor control mechanisms, such as swash plates, are prone to mechanical failure, high maintenance costs, and design complexity. This complexity can affect reliability, making these systems less attractive for long-term or demanding operations.

Transitioning from vertical to horizontal flight (and vice versa) remains a critical challenge for many hybrid UAVs. Ensuring stable and controlled transitions without losing altitude or causing instability is a significant technical hurdle that many systems fail to overcome smoothly.

It is known a document US9821909, describes a tail sitter aircraft with rotatable wings that transition between vertical and horizontal flight configurations. While this design addresses runway limitations and aims for efficient flight, it has drawbacks such as potential instability during vertical takeoffs and landings due to its high center of gravity, and increased drag from retractable landing legs or large tails used for stability. Document US10054958 describes a VTOL UAV that includes retractable wings and a contra-rotating propeller disk for providing vertical thrust in hover mode and horizontal thrust in level flight mode. While it achieves VTOL capabilities and offers efficient flight in both modes, it relies heavily on mechanical complexity, such as retractable wings and contra-rotating propellers, which can increase the risk of mechanical failure and maintenance costs.

Document US10246185discloses a VTOL aircraft system designed for vertical takeoff and landing, utilizing a fixed-wing design with contra-rotating propellers for rearward propulsion during takeoff and forward propulsion during horizontal flight. While it effectively manages VTOL operations, it relies on a complex propulsion system with a nose-down configuration, which complicates the transition between flight modes and may reduce stability during takeoff and landing.

Document US20180281942 describes a flying wing VTOL aircraft with foldable wings and rigid rotor propellers, designed to optimize storage and reduce weight. While this design eliminates the need for tail sections, reducing weight and complexity, it relies heavily on foldable wings and complex rotor systems that add mechanical risk and require precise control for stability.

Document US20180354612 describes a UAV rotor system with coaxial counter-rotating rotors, enabling vertical takeoff and landing (VTOL) operations. This system allows for selective "cocking" of the second blade assembly to provide enhanced maneuverability, such as lateral movement and thrust vectoring. While the system offers effective VTOL capabilities, it introduces significant mechanical complexity with the need for a swashplate and complex rotor control mechanisms, which can increase the risk of mechanical failure and maintenance needs.

Document US20190061936 describes a VTOL aircraft with vectored thrust that allows continuously variable pitch attitude during hover. The design focuses on using thrusters for transitioning between horizontal and vertical hover modes, without the need for traditional control surfaces like ailerons or elevators. While it provides flexibility in hover orientation, this system introduces complexity in managing multiple thrusters and requires precise vector control to maintain stability.

Document US20190061968 describes a hybrid VTOL fixed-wing drone with a canard-style body and multiple propellers arranged in linear support structures. This design focuses on minimizing drag and improving structural integrity by connecting forewings and main wings with linear supports. While it offers improvements in aerodynamic performance and redundancy in case of propeller failure, the design still relies on complex mechanical components such as multiple propellers and support structures, which may add to the overall weight and reduce efficiency.

The prior art documents primarily focus on various VTOL configurations and control mechanisms to achieve stable vertical takeoff, landing, and efficient horizontal flight. These inventions emphasize features like rotatable or retractable wings, complex rotor systems, and vectored thrust configurations to manage the transition between vertical and horizontal flight. Many prior art solutions include multiple propellers arranged in various patterns or foldable mechanisms to balance lift and aerodynamic efficiency. However, these designs introduce substantial mechanical complexity, increased weight, and drag, which reduces energy efficiency, stability, and reliability. Additionally, they typically rely on multiple propeller systems or intricate control setups to manage stability during flight transitions.

### SUMMARY OF THE INVENTION

The present invention is a hybrid Vertical Takeoff and Landing (VTOL) aircraft that combines the strengths of rotorcraft and fixed-wing flight. Designed for versatility, the aircraft uses an innovative dual-blade system with wide-chord blades, capable of generating high lift in both VTOL and fixed-wing modes. The proportional cross-section of the blades ensures effective performance in both rotational and horizontal flight positions, minimizing drag and optimizing stability.

The aircraft's hybrid propulsion system features electric motors for vertical operations and a gas engine for horizontal flight, allowing seamless transitions and efficient energy use. Duct fans are integrated to manage torque and improve stability during VTOL mode, while front and rear ailerons enhance control in horizontal flight without the need for complex rotor mechanisms. Solar modules recharge the aircraft's batteries in-flight, extending mission endurance and reducing downtime.

With its adaptable payload compartment, this aircraft addresses common limitations of current UAVs by enhancing flight range, energy efficiency, and payload capacity. This innovative design makes it suitable for a wide array of commercial, military, or industrial applications, including logistics, surveillance, and inspection tasks.

The advanced rotor control systems in traditional UAVs, such as swash plates, can be prone to mechanical failure and increase maintenance costs. Additionally, transitioning from vertical to horizontal flight remains challenging for many hybrid UAVs, as maintaining stability during transitions without altitude loss or instability is a technical hurdle.

### BRIEF DESCRIPTION OF THE DRAWINGS

Fig. 1 illustrates a perspective front view of hybrid VTOL aircraft -the primary components and layout of the aircraft in compact configuration for transportation.
Fig. 2 illustrates a back view of the hybrid VTOL aircraft -rear elements, including back skids, back ailerons, and propeller.
Fig. 3 illustrates a perspective back view of the hybrid VTOL aircraft -the primary components and layout of the aircraft in compact configuration for transportation.
Fig. 4 illustrates the top view of the hybrid VTOL aircraft in compact configuration for transportation.
Fig. 5 illustrates the side view of the hybrid VTOL aircraft depicting key components.
Fig. 6 illustrates the top view of the hybrid VTOL aircraft with front and rear ailerons fixed in a horizontal position during the aircraft's hovering phase.
Fig. 7 illustrates the airflow through the duct fans and duct system of the hybrid VTOL aircraft during flight.
Fig. 8 illustrates the top view of the hybrid VTOL aircraft with placed solar modules for in-flight recharging.
Fig. 9 illustrates the side view of the hybrid VTOL aircraft with payloads attached to the mounts.
Fig. 10 illustrates the top view of the hybrid VTOL aircraft with the front ailerons in a fixed vertical position during vertical takeoff or landing.
Fig. 11 illustrates detailed blade configuration of the wide-chord blade design for lift in hybrid VTOL aircraft model.

### LIST OF REFERENCE SIGNS:

1 - Blades;
2- Rotor;
3- Rear skids;
3' - Front skids;
4- Rear aileron;
4' - Front aileron;
5 - Propeller;
6- Rear duck fan
6' - Front duct fan
7 -Camera;
8- Electric motor;
9 - Battaries;
10 - Payload;
11 - aircraft rear compartment;
12 - Rear propulsion.
13 - Duct
14-Solar modules;
15 - Battaries;
16 - Gas engine;
17 - Gas tank;

### DETAILED DESCRIPTION OFTHE INVENTION

The aim of the invention is to create a versatile, energy-efficient, and stable hybrid VTOL (Vertical Takeoff and Landing) rotor aircraft that combines rotorcraft capabilities for vertical takeoff with fixed-wing functionality for long-distance horizontal flight. This invention overcomes limitations in current aircraft technology by enhancing endurance, stability, payload capacity, and range while reducing mechanical complexity. The aircraft features a dual-blade layout with wide-chord blades for high lifting power in hybrid VTOL aircraft mode, a gas-powered propeller for efficient horizontal travel, and aerodynamic skids that provide stability and reduce drag during fixed-wing flights. Additionally, the aircraft integrates a hybrid propulsion system, torque-managing duct fans, and solar modules for in-flight recharging. Optimized for applications in logistics, surveillance, and industrial inspection, the aircraft can operate over long distances and in varied environments without extensive takeoff or landing infrastructure.

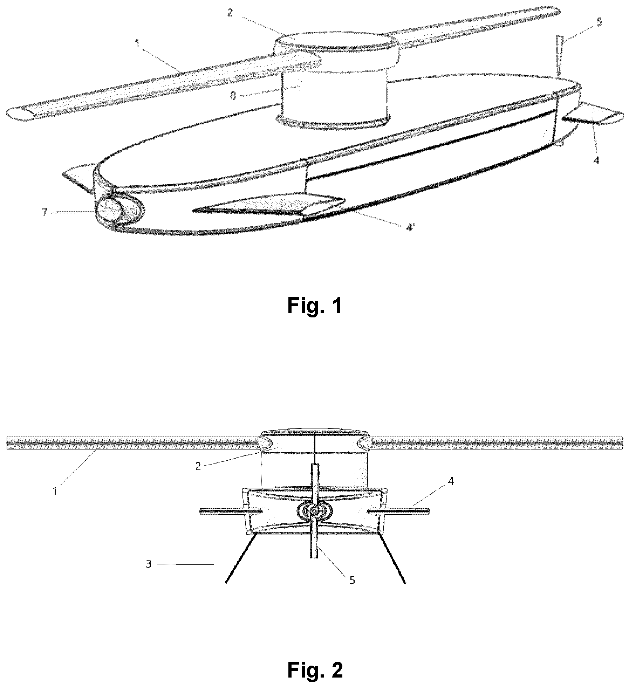

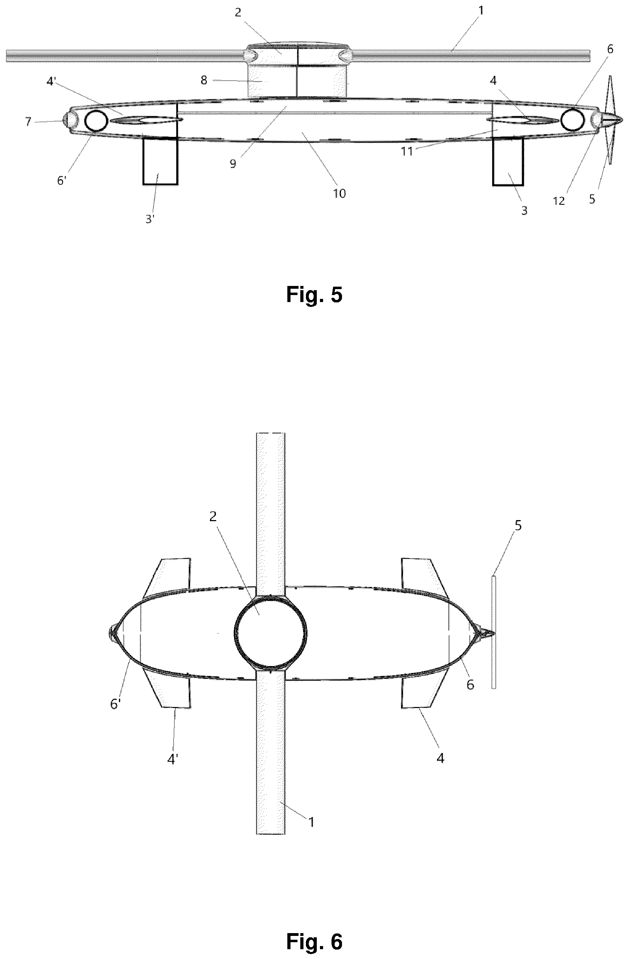

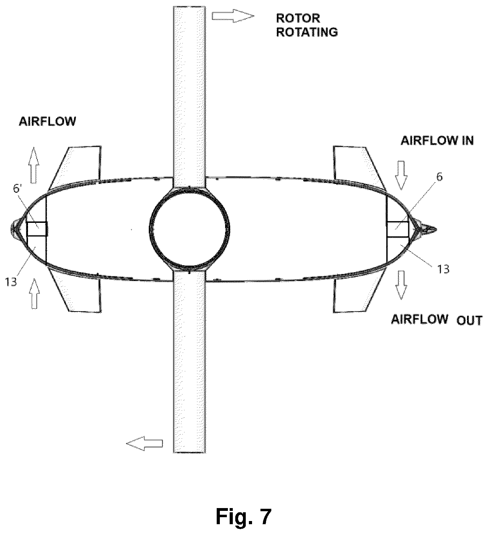

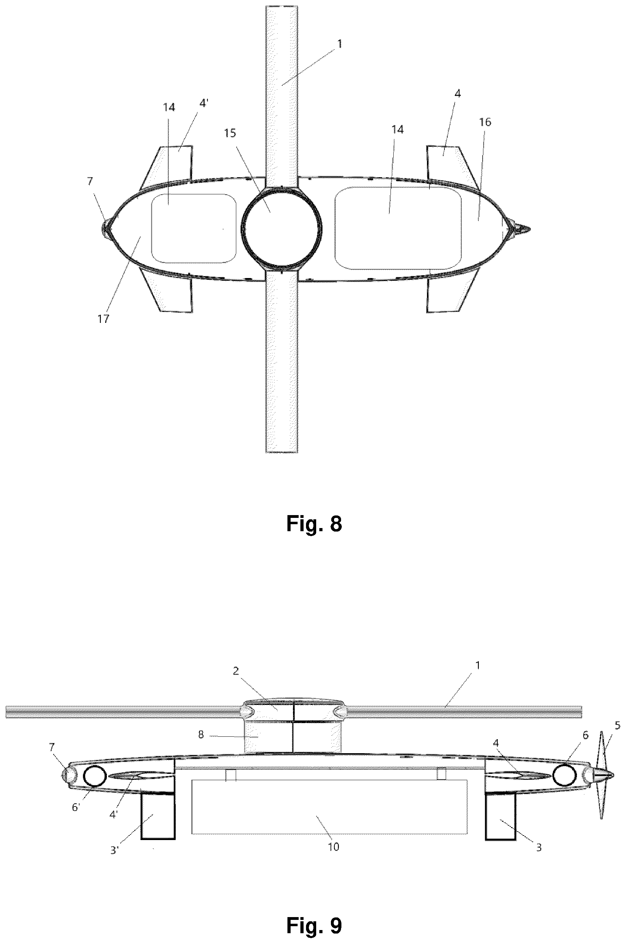

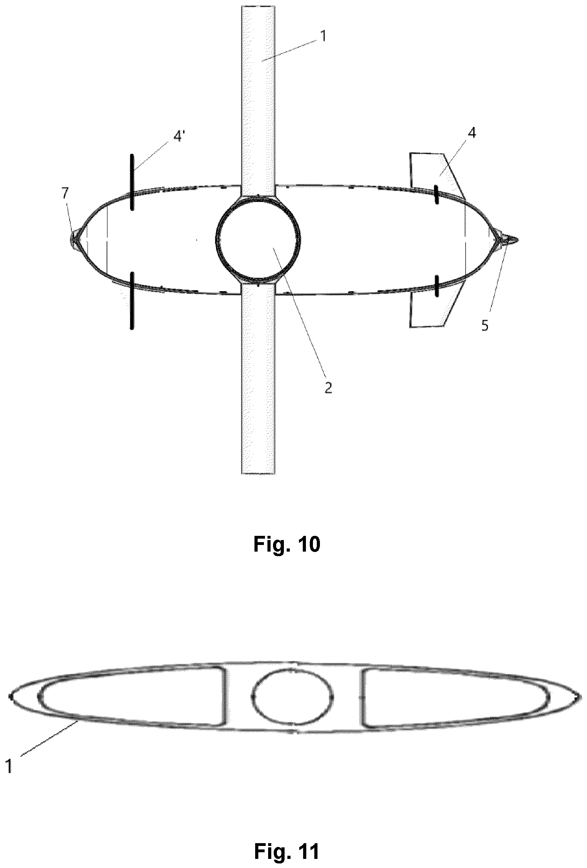

A vertical take-off or landing (VTOL) aircraft, designed for both vertical and horizontal flight, comprising: a fuselage that forms the main body of the aircraft; a rotor function provided by the main rotor (2); driven by electric motor (8) powered by an electric batteries (9, 15) (Fig. 5, 8), optionally with solar modules (14) on the top of fuselage to recharge batteries (9, 15) in the fixed wing mode (Fig. 8); blades (1) designed for high lift generation (Fig. 11), and an anti-torque function achieved through a duct system. The aircraft comprises components for transitioning from VTOL to horizontal flight and flight control systems, specifically: duct fans (6, 6') located at the front and rear of the fuselage, which perform an anti-torque function by channeling airflow through the fuselage to both sides, ensuring stability and control in VTOL mode (Fig. 7); movable front and rear skids (3, 3'), which serve as vertical stabilizers during horizontal flight to maintain aerodynamic stability (Fig. 2, 5, 9); two wide-chord blades (1) arranged to provide high lifting power in both VTOL mode and fixed-wing mode for horizontal flight, with each blade designed with a fully proportional cross-section that optimizes performance in both rotational and fixed positions; a main rotor (2) which generates the large torque necessary for blade rotation during VTOL operations; a gas engine (16) that powers a rear pusher propeller (5) for efficient propulsion during horizontal flight, allowing the aircraft to cover longer distances (Fig. 5, 8).

In Fig. 1 a comprehensive view can be seen displaying the primary components of the hybrid VTOL aircraft, including the blades (1), rotors (2), rear and front ailerons (4, 4'), propeller (5), and duct fans (6, 6'). This overview highlights the layout and functionality of the aircraft, particularly how these components work together for stability and control in both vertical and horizontal flight modes.

This top-down view in Fig. 8 focuses on the placement of the solar modules (14) on the aircraft. These solar panels recharge the batteries in-flight, extending the aircraft's operational endurance and allowing for longer missions. The layout of the solar modules is optimized to capture sunlight efficiently during flight, contributing to the aircraft's energy management system.

The side perspective of the aircraft shown in Fig. 5 provides a detailed view of the aircraft's structural configuration, including the blades (1), rotor (2), front and rear skids (3, 3'), front and rear ailerons (4, 4'), and rear propulsion system (12) with gas engine (16) (Fig. 8) and propeller (5). Additionally, it shows the positioning of the electric motor (8), batteries (9), payload compartment (10), gas engine compartment (11), gas tank (17) (Fig. 8) and camera (7). This view emphasizes how these elements are arranged to support lift, stability, energy efficiency, and payload capacity across both vertical and horizontal flight modes.

A fuselage which is the main body of the aircraft, housing essential components and providing structural integrity for both VTOL and horizontal flight modes. The fuselage features a tapered design at both ends, resembling the shape for optimizing aerodynamic properties. This streamlined and tapered structure minimizes drag, enhancing speed and stability during horizontal flight.

A main rotor (2) system based on an electric motor (8) that drives the blades (1) for lift in VTOL mode. The electric motor is powered by rechargeable batteries (9, 15), which can generate the significant torque needed to rotate the blades and maintain stable vertical lift. This electric-powered rotor provides precise control and energy efficiency during takeoff and landing.

The aircraft is equipped with two wide-chord blades (1) arranged symmetrically to produce high lift in VTOL mode and effective lift in fixed-wing mode during horizontal flight. In Fig. 11 is shown the view of design and structure of the blades (1), emphasizing their wide chord and proportional cross-section optimized for generating high lift in both VTOL and fixed-wing modes. The blades (1) feature a fully proportional cross-section, enabling them to perform optimally in both rotational (VTOL) and fixed (horizontal) configurations. This design minimizes drag and maximizes aerodynamic efficiency, allowing the aircraft to smoothly transition between flight modes while maintaining lift and stability.

To counteract the torque produced by the rotor (2) during vertical operations, the aircraft is equipped with front and rear duct fans (6, 6'). These duct fans are located in the front and rear sections of the fuselage and channel airflow through ducts (13) that extend to both sides of the fuselage. By managing torque during VTOL operations, these duct fans (6, 6') maintain stability, preventing unwanted rotational drift and ensuring controlled flight during takeoff and landing. The top-down view in Fig. 7 shows the airflow dynamics through the aircraft's duct fans (6, 6') and duct system (13) during lift, landing and flight. The airflow is directed efficiently through these components, enhancing stability and control by managing torque and reducing turbulence. This configuration illustrates how the duct fans and duct system contribute to smooth transitions between flight modes and maintain optimal aerodynamic performance.

The aircraft includes front and rear skids (3, 3') (Fig. 2, Fig. 3 and Fig. 5) that are movable to provide vertical stabilization during horizontal flight. In fixed-wing mode, these skids act as stabilators, enhancing aerodynamic stability and reducing drag. This feature contributes to smoother flight and increased control, particularly in high-speed horizontal flight.

The aircraft incorporates transitioning from VTOL to horizontal flights and flight control systems that enables seamless switching from VTOL to horizontal flight. During transition, the blades (1) switch to a fixed-wing orientation, while the gas engine (16) engages to power the rear pusher propeller (5), propelling the aircraft forward in horizontal mode. This allows for efficient, long-distance travel once the aircraft has reached cruising altitude.

The flight control system comprises the following components: rotor (2) with blades (1) for lift generation, duct fans (6, 6') for torque management, front and rear ailerons (4, 4') for controlling airflow and stability, and front and rear skids (3, 3') for additional stabilization.

The flight control system relies on four ailerons (4, 4') to redirect airflow by tilting them appropriately. This design simplifies the rotor (2) blades (1) construction by removing the need for swash plates and complex pitch control mechanisms, even reducing the need for ball bearings. This streamlined approach results in a less complex and more reliable control system for managing VTOL and horizontal flight operations.

Fig. 2 illustrates the arrangement of rear components, including the rear skids (3), rear aileron (4), and propeller (5), providing insight into the structural layout and positioning of elements essential for stability and control during flight.

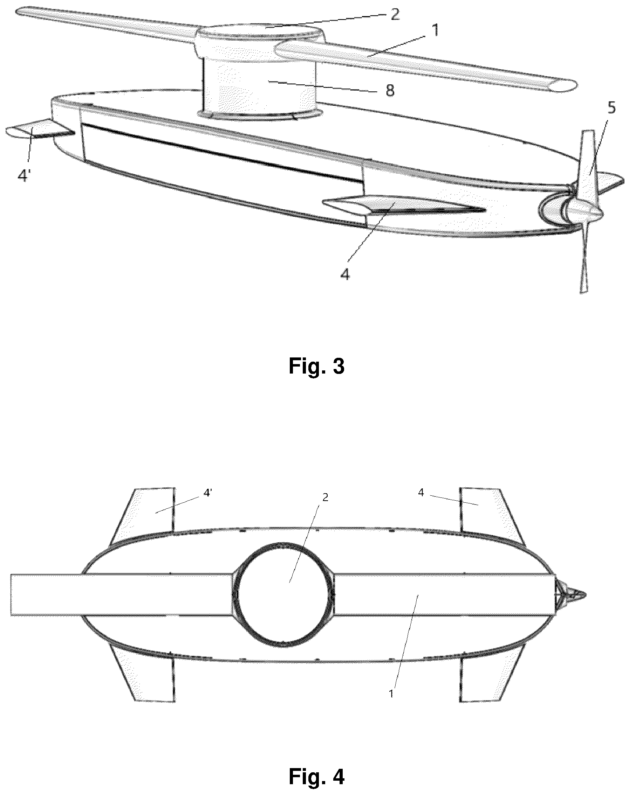

In Fig. 3 and Fig. 4 the aircraft is shown in a compact, transport-ready configuration, detailing how components like blades (1) and skids (3, 3') are positioned for transport.

A payload compartment (10) connected to the aircraft's main body illustrated in Fig. 9. This configuration allows for flexibility in payload capacity and size, making it adaptable to various cargo types. The isolated connection of the payload compartment helps maintain the aircraft's center of gravity and stability during both vertical and horizontal flight modes.

The front ailerons (4') positioned vertically to enhance stability and control during Vertical Takeoff and Landing (VTOL) shown in Fig. 10. This vertical orientation of the front ailerons (4') aids in managing airflow and provides additional stability, supporting smooth lift-off and landing maneuvers. This configuration illustrates the role of the front ailerons in maintaining balance and control during VTOL operations.

In the initial VTOL mode, the rotor (2) begins to rotate the blades (1), generating lift. The front and rear ailerons (4, 4') are directed in a vertical position to manage the downwash airflow created by the rotor (2). Gyroscopes installed in the system provide the position data of the fuselage (main body), which, together with the electronic control system, adjusts the ailerons (4, 4') positions to manipulate the airflow. This allows for two control options: a) redirecting the downwash airflow toward the center of the aircraft to increase lift, or b) redirecting the airflow toward the nose and rear of the aircraft to decrease lift as needed.

When the aircraft reaches the required altitude, and the aircraft obtains horizontal speed, the other forces start to impact the aircraft flight. The front and rear aircraft skids (3, 3') start to act as vertical stabilators, that take participation in counteracting of rotating momentum together with the duct fans (6, 6'), until the speed increases enough to allow the system to switch off the duct fans (6, 6') and the horizontal stabilization is managed by front and rear skids (3, 3'). The headwind by the front and rear skids (3, 3') stabilizes the aircraft in the horizontal position (Fig. 2).

Roll control: to control roll (rotation around the aircraft's longitudinal axis), the ailerons on one fuselage are angled up while the ailerons on the opposite fuselage are angled down. This creates a differential lift force on each side of the aircraft, causing it to roll in the direction where the lift is lower.

Further control is managed through ailerons (4, 4').

Yaw control: yaw (rotation around the vertical axis) is achieved similarly to roll control, but the intention is to create a sideways motion. Tilting the ailerons on one fuselage up and those on the opposite fuselage down induces a yawing moment, causing the aircraft's nose to turn left or right.

Pitch control: pitch (rotation around the lateral axis) is managed by adjusting the ailerons on the front and rear ends of the fuselages. The front ailerons tilt in one direction (e.g., up), while the rear ailerons tilt in the opposite direction (e.g., down). This arrangement creates a torque that pitches the aircraft nose up or down.

The aircraft control system enables seamless transition switching from VTOLto horizontal flight. During the transition, the blades (1) shift and lock to a fixed-wing orientation, and the aircraft is powered by a gas engine (16) located in the gas engine compartment (11). This gas engine (16) drives the rear pusher propeller (5), providing the necessary thrust for sustained, efficient horizontal flight. This hybrid propulsion system enables the aircraft to cover long distances in fixed-wing mode, making it suitable for applications requiring extended range.

Referring to Fig. 6, the aircraft is shown in a hovering position, with its fixed wings (1) providing lift and stability, and the front and rear ailerons (4, 4') positioned for balanced control. This configuration demonstrates how the fixed wings (1) and ailerons (4, 4') work together to maintain stability and manage airflow during hover, contributing to steady lift and enhanced aerodynamic performance. This view highlights the aircraft's ability to hover efficiently, supported by its fixed-wing and aileron design.

The present invention describes a versatile VTOL aircraft capable of both vertical and horizontal flight, integrating a hybrid propulsion system for extended range, duct fans for stability and greater endurance. The simplified control system enables smooth transitions between flight modes and reduces complexity, enhancing reliability and adaptability across diverse applications. This description illustrates preferred embodiments to showcase the invention's principles and optimal applications. However, it is not intended to restrict possible implementations; modifications may be made.

## Claims

1. A VTOL aircraft for vertical and fixed-wing horizontal flight, comprising:
a fuselage serving as the main body, housing the components for stability and for propulsion;
a main rotor (2);
blades (1);
**characterized in that** the aircraft additionally comprises:
two blades (1) with a fully proportional cross-sectional shape, configured to generate high lift in both VTOL mode and fixed-wing mode during horizontal flight; and
a flight control system for transitioning the aircraft from VTOL to horizontal flight, configured to manage stability and control in both VTOL and horizontal flight modes.

2. The aircraft, according to claim 1, **characterized in that**
components for the aircraft stability comprise:
a set of duct fans (6, 6') positioned at the front and rear of the fuselage, configured to counteract the torque generated by the main rotor (2) during VTOL operations;
the front and rear skids (3, 3') that function as vertical stabilizers during horizontal flight to enhance aerodynamic stability;
the front and rear ailerons (4, 4') configured to control roll, pitch, and yaw in both flight modes by redirecting airflow around the fuselage.

3. The aircraft, according to any of claims 1, 2, **characterized in that** components for the aircraft propulsion comprise:
a main rotor (2) driven by an electric motor (8) powered by onboard batteries (9, 15) for generating vertical lift in VTOL mode;
a gas engine (16) for powering a rear pusher propeller (5) for sustained horizontal flight in fixed-wing mode.

4. The aircraft, according to claim 3, **characterized in that** the solar panels (14) are mounted on the top of the fuselage to recharge the batteries (9,15) during horizontal flight to extend operational endurance.

5. The aircraft, according to any of claims 3, 4, **characterized in that** the flight control system is configured to enable a smooth transition from VTOL to horizontal flight by:
switching the orientation of the wide-chord blades (1) from rotational to fixed-wing alignment;
deactivating the main rotor (2) and activating the rear pusher propeller (5),
switching off the duct fans (6, 6'); and
adjusting the front and rear ailerons (4, 4') for stable horizontal flight.

6. The aircraft, according to any of claims 5, **characterized in that** horizontal stabilization is managed by front and rear skids (3, 3').

7. The aircraft, according to any of the previous claims, **characterized in that,** further comprising a payload compartment (10) centrally mounted in the fuselage, designed to maintain the aircraft's center of gravity during both VTOL and horizontal flight modes, allowing for a variety of payload types.

8. A method for operating the aircraft according to any of claims 1-7, comprising the steps of:
activating the electric motor (8) to drive the main rotor (2) with the wide-chord blades (1) for vertical take-off;
controlling the roll, pitch, and yaw of the aircraft in VTOL mode using front and rear ailerons (4, 4') and duct fans (6, 6');
transitioning to horizontal flight by switching off the main rotor (2), locking the wide-chord blades (1) to a fixed-wing alignment, and activating a gas engine (16) that drives a rear pusher propeller (5);
stabilizing the aircraft in horizontal mode using front and rear skids (3, 3') that serve as vertical stabilizers, and managing aerodynamic stability with ailerons (4, 4') adjusted according to airflow conditions.

9. The method for operating the aircraft according to claim 8, **characterized in that,** recharging the onboard batteries (9, 15) via solar panels (14) mounted on the top of the fuselage during horizontal flight.
